# EUROPEAN PATENT APPLICATION

(11) **EP 4 694 076 A1**
(43) Date of publication of application: **11.02.2026**
(21) Application number: 24802775.7
(22) Date of filing: 24.04.2024
(51) Int. Cl.: H04L 47/11

(54) **NETWORK CONGESTION CONTROL METHOD, APPARATUS, CHIP, ELECTRONIC DEVICE AND STORAGE MEDIUM**

(30) Priority: 08.05.2023 CN 202310514423
(71) Applicant: Shenzhen Jaguar Microsystems Co., Ltd., Shenzhen, Guangdong 518100 (CN)
(72) Inventor: LIU, Jingtao, Shenzhen, Guangdong 518100 (CN); HUANG, Kaixin, Shenzhen, Guangdong 518100 (CN); LIU, Wentao, Shenzhen, Guangdong 518100 (CN); LI, Weihang, Shenzhen, Guangdong 518100 (CN); CHENG, Lang, Shenzhen, Guangdong 518100 (CN)
(74) Representative: HGF
(86) International application number: PCT/CN2024/089605
(87) International publication number: WO 2024/230490

(57) **Abstract**

Disclosed in the present application are a network congestion control method, an apparatus, a chip, an electronic device and a storage medium. The method applied to a sending end comprises: sending a first request message to a receiving end, the first request message carrying a first timestamp (S210); receiving a first response message which is sent by the receiving end and corresponds to the first request message, and recording a second timestamp (S220); on the basis of the first timestamp, the second timestamp, a third timestamp and a fourth timestamp, determining a first network transmission duration of the first request message (S230); acquiring a second network transmission duration and a reference network transmission duration (S240); on the basis of comparison relationships between the first network transmission duration and the second network transmission duration and between the first network transmission duration and the reference network transmission duration, determining a network state of transmitting the first request message (S250); and, on the basis of the network state, adjusting the sending rate of a next request message of the first request message (S260).

## Description

This application claims priority to Chinese patent application No. 202310514423.4, filed to China National Intellectual Property Administration on May 8, 2023, the entire content of which is incorporated herein by reference.

### TECHNICAL FIELD

The present application relates to the field of computer technology, and for example, to a network congestion control method and apparatus, a chip, an electronic device, and a storage medium.

### BACKGROUND

In the related art, a network congestion control method usually uses RTT (Round Trip Time) as a congestion signal to determine the congestion state of the network, and then adjusts the rate at which a transmitting end transmits a package to a receiving end to control the network congestion. RTT refers to the round trip time of a package, that is, the difference between the time when a request package is transmitted and the time when a response package is received.

However, the current network congestion control method using RTT as the congestion signal, on the one hand, does not distinguish between the network propagation duration of the package and the processing duration of the package at the receiving end, and is easily affected by the jitter of the processing duration of the receiving end, resulting in determination distortion of the congestion state of the network; on the other hand, only relying on a single RTT signal to determine the congestion state of the network can only determine whether a congestion exists or not, but cannot determine the degree of congestion, and the determination distortion of the congestion state of the network will also occur, resulting in the inability to reasonably adjust the transmission rate of the request package, which makes the effect of the network congestion control poor.

### SUMMARY

The present application provides a network congestion control method and apparatus, a chip, an electronic device, and a storage medium, so as to realize more accurate determination of a congestion state of a network, and further more reasonably adjust a transmission rate of a request package, so as to effectively control the network congestion.

According to a first aspect of the present application, there is provided a network congestion control method, applied to a transmitting end, and the method includes:
transmitting a first request package to a receiving end, wherein the first request package carries a first timestamp, and the first timestamp is configured to mean a time at which the transmitting end transmits the first request package;
receiving a first response package corresponding to the first request package and transmitted by the receiving end, and recording a second timestamp, wherein the first response package carries the first timestamp, a third timestamp, and a fourth timestamp, the second timestamp is configured to mean a time when the transmitting end receives the first response package, the third timestamp is configured to mean a time when the receiving end receives the first request package, and the fourth timestamp is configured to mean a time when the receiving end transmits the first response package;
determining a first network transmission duration of the first request package based on the first timestamp, the second timestamp, the third timestamp, and the fourth timestamp;
acquiring a second network transmission duration and a reference network transmission duration, wherein the second network transmission duration is a network transmission duration of a previous first request package of the current first request package, and the reference transmission duration is a historical minimum network transmission duration of a request package of a data flow to which the first request package belongs;
determining a network state for transmitting the first request package, based on comparison relationships between the first network transmission duration and the second network transmission duration, and between the first network transmission duration and the reference network transmission duration, respectively; and
adjusting a transmission rate of a next request package of the first request package, based on the network state.

According to a second aspect of the present application, there is provided a network congestion control method, applied to a receiving end, and the method includes:
receiving a first request package transmitted by a transmitting end, wherein the first request package carries a first timestamp, and the first timestamp is configured to mean a time at which the transmitting end transmits the first request package; and
transmitting a first response package corresponding to the first request package to the transmitting end, wherein the first response package carries the first timestamp, a third timestamp, and a fourth timestamp, the third timestamp is configured to mean a time when the receiving end receives the first request package, and the fourth timestamp is configured to mean a time when the receiving end transmits the first response package.

According to a third aspect of the present application, there is provided a network congestion control apparatus, configured at a transmitting end, and the apparatus includes: a first package transmitting module, a first package receiving module, a duration determining module, a duration acquisition module, a network state determining module, and a rate adjusting module.

The first package transmitting module is configured to transmit a first request package to a receiving end, wherein the first request package carries a first timestamp, and the first timestamp is configured to mean a time at which the transmitting end transmits the first request package;
the first package receiving module is configured to receive a first response package corresponding to the first request package and transmitted by the receiving end, and record a second timestamp, wherein the first response package carries the first timestamp, a third timestamp, and a fourth timestamp, the second timestamp is configured to mean a time when the transmitting end receives the first response package, the third timestamp is configured to mean a time when the receiving end receives the first request package, and the fourth timestamp is configured to mean a time when the receiving end transmits the first response package;
the duration determining module is configured to determine a first network transmission duration of the first request package based on the first timestamp, the second timestamp, the third timestamp, and the fourth timestamp;
the duration acquisition module is configured to acquire a second network transmission duration and a reference network transmission duration, wherein the second network transmission duration is a network transmission duration of a previous first request package of the current first request package, and the reference transmission duration is a historical minimum network transmission duration of a request package of a data flow to which the first request package belongs;
the network state determining module is configured to determine a network state for transmitting the first request package, based on comparison relationships between the first network transmission duration and the second network transmission duration, and between the first network transmission duration and the reference network transmission duration, respectively; and
the rate adjusting module is configured to adjust a transmission rate of a next request package of the first request package based on the network state.

According to a fourth aspect of the present application, there is provided a network congestion control apparatus, configured at a receiving end, and the apparatus includes: a second package receiving module and a second package transmitting module.

The second package receiving module is configured to receive a first request package transmitted by a transmitting end, wherein the first request package carries a first timestamp, and the first timestamp is configured to mean a time at which the transmitting end transmits the first request package; and
the second package transmitting module is configured to transmit a first response package corresponding to the first request package to the transmitting end, wherein the first response package carries the first timestamp, a third timestamp, and a fourth timestamp, the third timestamp is configured to mean a time when the receiving end receives the first request package, and the fourth timestamp is configured to mean a time when the receiving end transmits the first response package.

According to a fifth aspect of the present application, there is provided a chip, which includes:
a processor configured to execute computer program instructions stored on a memory, wherein when the computer program instructions are executed by the processor, the chip is triggered to execute the network congestion control method provided in the first aspect or the second aspect of the present application.

According to a sixth aspect of the present application, there is provided an electronic device, which includes a chip provided in the fifth aspect of the present application, and a memory;
the memory is configured to store computer program instructions; and
when the computer program instructions are executed by the processor in the chip, the processor is caused to implement the network congestion control method provided in the first aspect or the second aspect of the present application.

According to a seventh aspect of the present application, there is provided a computer readable storage medium, on which computer program instructions are stored, the computer program instructions are configured such that, when executed by the processor, cause the processor to implement the network congestion control method provided in the first aspect or the second aspect of the present application.

### BRIEF DESCRIPTION OF THE DRAWINGS

FIG. 1 is a schematic diagram of an application scenario of a network congestion control method provided by the present application.
FIG. 2 is a schematic flow chart of a network congestion control method applied to a transmitting end provided by an embodiment of the present application.
FIG. 3 is a schematic flow chart of a network congestion control method applied to a receiving end provided by an embodiment of the present application.
FIG. 4 is a schematic structural diagram of a network congestion control apparatus configured at a transmitting end provided by an embodiment of the present application.
FIG. 5 is a schematic structural diagram of a network congestion control apparatus configured at a receiving end provided by an embodiment of the present application.

### DETAILED DESCRIPTION OF THE EMBODIMENTS

It should be noted that the terms "first" and "second" in the specification, claims and drawings of the present application are used to distinguish similar objects, and are not necessarily used to describe a specific order or sequence. It is to be understood that, the terms so used are interchangeable under appropriate circumstances so that the embodiments of the present application described herein can be implemented in an order other than those illustrated or described herein. In addition, the terms "include" and "have" and any variations thereof are intended to cover non-exclusive inclusions; for example, processes, methods, systems, products or equipment that contain a series of steps or units need not be limited to those clearly listed steps or units, but may include other steps or units not explicitly listed or inherent to these processes, methods, products, or equipment.

It can be understood that the data (including but not limited to the data itself, the acquisition or use of the data) involved in the present technical solution shall comply with the requirements of corresponding laws, regulations and relevant provisions.

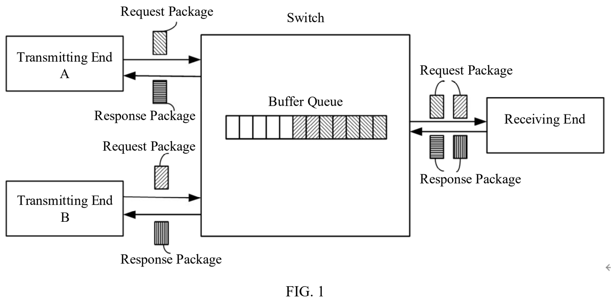

The network congestion control method provided by the present application can perform a congestion control on a package transmitted between a transmitting end and a receiving end. Exemplarily, an application scenario of the network congestion control method can be shown in FIG. 1. FIG. 1 is a schematic diagram of an application scenario of a network congestion control method provided by the present application.

As shown in FIG. 1, when a transmitting end A and a transmitting end B transmit request packages to a receiving end, the request package transmitted by the transmitting end A and the request package transmitted by the transmitting end B arrive at the receiving end through a switch. Based on the request package by the transmitting end A, a response package returned by the receiving end to the transmitting end A is returned to the transmitting end A through the switch. Based on the request package by the transmitting end B, a response package returned by the receiving end to the transmitting end B is returned to the transmitting end B through the switch. If a rate of data flow into the switch is greater than a rate of data flow out of the switch, package accumulation may occur in the buffer queue within the switch, resulting in an occurrence of congestion in the packages within the switch.

It is to be noted that, in the present application, the package includes a request package and a response package. Based on a service request, the package transmitted by the transmitting end to the receiving end is a request package, and a number of request packages flowing from the transmitting end to the receiving end form a data flow. The package returned by the receiving end to the transmitting end based on the request package is a response package, and a number of response packages flowing from the receiving end to the transmitting end also form a data flow.

Defined according to the flow direction of the request package, the transmitting end is the source end, and the receiving end is the destination end. For example, the transmitting end and the receiving end may each be a NIC (Network Interface Card) or a DPU (Data Processing Unit), or may be a software or hardware module configured in the NIC or DPU, or may be an electronic device configured with the NIC or DPU, or may be a software or hardware module in the electronic device, where the software or hardware module may implement at least one service function alone or in combination with another software or hardware module(s). The electronic device may be a computer, a server, or the like.

In order to avoid a situation where network congestion may occur among packages transmitted between the transmitting end and the receiving end, the present application provides a network congestion control method. The network congestion control method is applied to a transmitting end and a receiving end.

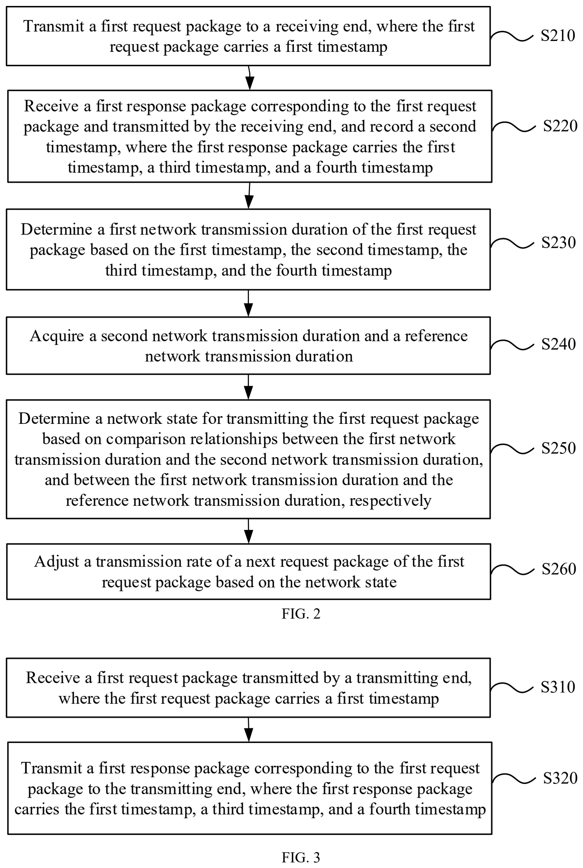

For the network congestion control method applied to the transmitting end, please refer to FIG. 2, which is a schematic flow chart of a network congestion control method applied to a transmitting end provided by an embodiment of the present application. As shown in FIG. 2, the network congestion control method may include the following steps.

In step S210, a first request package is transmitted to a receiving end, where the first request package carries a first timestamp, and the first timestamp is configured to mean a time at which the transmitting end transmits the first request package.

In an embodiment, when a service request is received, the transmitting end parses the service request, and then transmits a request package to the receiving end based on the service request. The service request may be an instruction instructing the transmitting end to transmit data to the receiving end. The service request includes at least five-tuple information of the receiving end.

In an embodiment, when transmitting the first request package to the receiving end, the transmitting end constructs the first request package. During the process of constructing the first request package, the transmitting end records a time when the first request package is to be transmitted to the receiving end, and places the time as a first timestamp into a package header of the first request package. Where the first request package is a data package with an RTT (Round Trip Time) request. The first request package includes an RTT extended package header, and the RTT extended package header of the first request package carries the first timestamp.

For example, in the present application, the request package includes two types of request packages. One type is the first request package, and the other type is a second request package. For the first request package, the transmitting end transmits the first request package to the receiving end in two scenarios. In the first scenario, in order to detect the congestion state of the network, when the transmitting end transmits the request package for the first time, it transmits the first request package to the receiving end. In the second scenario, when the transmitting end receives a response package (i.e., a first response package) of the first request package, the transmitting end transmits the first request package to the receiving end.

For the second request package, the transmitting end transmits the second request package to the receiving end, in addition to transmitting the first request package to the receiving end. In addition, when the transmitting end receives a second response package of the second request package, the transmitting end transmits the second request package to the receiving end. Where the second request package is an ordinary data package and does not carry the first timestamp. The second response package does not carry the first timestamp, the third timestamp, and the fourth timestamp.

In step S220, a first response package corresponding to the first request package and transmitted by the receiving end is received, and a second timestamp is recorded, where the first response package carries the first timestamp, a third timestamp, and a fourth timestamp.

In an embodiment, when the transmitting end receives the first response package corresponding to the first request package returned by the receiving end, the transmitting end records a time when the first request package is received as the second timestamp. The second timestamp may be configured to mean a time when the transmitting end receives the first response package. The first response package includes an RTT package header, and the first response package carries the first timestamp, the third timestamp, and the fourth timestamp in the RTT package header. The third timestamp may be configured to mean a time when the receiving end receives the first request package. The fourth timestamp may be configured to mean a time when the receiving end transmits the first response package.

In step S230, a first network transmission duration of the first request package is determined based on the first timestamp, the second timestamp, the third timestamp, and the fourth timestamp.

In an embodiment, the first network transmission duration of the first request package may be understood as a duration from when the transmitting end transmits the first request package to when the transmitting end receives the first response package corresponding to the first request package, minus a processing duration from when the receiving end receives the first request package to when the receiving end transmits the first response package corresponds to the first request package.

In a modified embodiment of an embodiment, every time after the first network transmission duration of the current first request package is determined, the transmitting end stores the first network transmission duration of the current first request package in a storage module.

In the present application, by determining the first network transmission duration of the first request package by calculation, the network transmission duration of the first request package can be distinguished from the processing duration of the first request package at the receiving end, thereby avoiding a situation in which the determination of the congestion state of the network is distorted due to the influence of jitter of the processing duration of the first request package at the receiving end.

In step S240, a second network transmission duration and a reference network transmission duration are acquired.

In an embodiment, the second network transmission duration is a first network transmission duration of a previous first request package of the current first request package. The transmitting end may acquire the first network transmission duration of the previous first request package of the current first request package from the storage module. The reference transmission duration is a historical minimum first network transmission duration of the first request package. The transmitting end may select the historical minimum first network transmission duration of the first request package from the storage module.

In step S250, a network state for transmitting the first request package is determined based on comparison relationships between the first network transmission duration and the second network transmission duration, and between the first network transmission duration and the reference network transmission duration, respectively.

In an embodiment, after obtaining the first network transmission duration, the second network transmission duration, and the reference network transmission duration, the transmitting end may perform magnitude comparisons between the first network transmission duration and the second network transmission duration, and between the first network transmission duration and the reference network transmission duration, respectively, so that a first comparison result of the first network transmission duration and the second network transmission duration can be obtained, and a second comparison result of the first network transmission duration and the reference network transmission duration can be obtained, and a network state for transmitting the first request package can be further determined based on the first comparison result and the second comparison result.

For example, the determining a network state for transmitting the first request package, based on comparison relationships between the first network transmission duration and the second network transmission duration, and between the first network transmission duration and the reference network transmission duration, respectively, may include at least the following several situations:
Situation 1: when the first network transmission duration is less than the second network transmission duration and greater than the reference network transmission duration, the network state may be determined as that a congestion exists and the congestion tends to be relieved.
Situation 2: when the first network transmission duration is less than the second network transmission duration and is equal to or less than the reference network transmission duration, the network state may be determined as that a congestion is likely to exist and the congestion tends to be relieved.
Situation 3: when the first network transmission duration is equal to the second network transmission duration and is greater than the reference network transmission duration, the network state may be determined as that a congestion exists and the congestion remains stable.
Situation 4: when the first network transmission duration is equal to the second network transmission duration and is equal to the reference network transmission duration, the network state may be determined as that a congestion is likely to exist and the congestion remains stable.
Situation 5: when the first network transmission duration is greater than the second network transmission duration and greater than the reference network transmission duration, the network state may be determined as that a congestion exists and the congestion tends to be severe.

It should be noted that, a situation in which the first network transmission duration is equal to the second network transmission duration and is less than the reference network transmission duration, is a situation that does not exist. A situation in which the first network transmission duration is larger than the second network transmission duration and is equal to or less than the reference network transmission duration, is also a situation that does not exist.

In the present application, by determining the network state through performing double determinations on the first network transmission duration with the second network transmission duration and the reference network transmission duration respectively, not only the existence of congestion can be determined, but also the degree of congestion and the trend of congestion can be determined, and the determination of the network congestion can be made more accurate.

In step S260, a transmission rate of a next request package of the first request package is adjusted based on the network state.

In a modified embodiment of an embodiment, the adjusting the transmission rate of the next request package of the first request package based on the network state may include: acquiring a transmission rate of the first request package, and adjusting the transmission rate of the next request package of the first request package based on the network state and the transmission rate of the first request package.

The adjusting the transmission rate of the next request package of the first request package based on the network state and the transmission rate of the first request package may include at least the following several situations:
Situation 1: when the network state is that a congestion exists and the congestion tends to be alleviated, or that a congestion is likely to exist and the congestion tends to be alleviated, a transmission rate of a next request package of the first request package may be maintained at the transmission rate of the first request package.
Situation 2: when the network state is that a congestion exists and the congestion remains stable, or that a congestion exists and the congestion tends to be severe, the transmission rate of the first request package may be reduced, to serve as the transmission rate of the next request package of the first request package.
Situation 3: when the network state is that a congestion is likely to exist and the congestion remains stable, the transmission rate of the first request package may be increased, to serve as the transmission rate of the next request package of the first request package.

In the network congestion control method provided by the present application, by recording the first timestamp, the second timestamp, the third timestamp, and the fourth timestamp, and determining the first network transmission duration of the first request package by calculation, the network transmission duration of the first request package can be distinguished from the processing duration of the first request package at the receiving end, thereby avoiding a situation in which the determination of the congestion state of the network is distorted due to the influence of jitter of the processing duration of the first request package at the receiving end. In addition, by determining the network state through performing double determinations on the first network transmission duration with the second network transmission duration and the reference network transmission duration respectively, not only the existence of congestion can be determined, but also the degree of congestion can be determined, and the determination of the network congestion can be made more accurate. Thereby, the transmission rate of the next request package of the first request package is adjusted more reasonably and the network congestion is effectively controlled.

For the network congestion control method applied to the receiving end, please refer to FIG. 3, which is a schematic flow chart of a network congestion control method applied to a receiving end provided by an embodiment of the present application. As shown in FIG. 3, the network congestion control method may include the following steps.

In S310, a first request package transmitted by a transmitting end is received, where the first request package carries a first timestamp. The first timestamp is configured to mean a time at which the transmitting end transmits the first request package.

In an embodiment, when receiving the first request package, the receiving end parses the first request package. The receiving end obtains the first timestamp by parsing the first request package, so as to know that the first request package is a data package with an RTT request. After knowing that the first request package is a data package with an RTT request, the receiving end records a time when the first request package is received, and regards the time as a third timestamp.

In step S320, a first response package corresponding to the first request package is transmitted to the transmitting end, where the first response package carries the first timestamp, a third timestamp, and a fourth timestamp.

In an embodiment, when transmitting the first response package to the transmitting end, the receiving end constructs the first response package. During the process of constructing the first response package, the receiving end records a time when the first response package is to be transmitted to the transmitting end, and regards the time as a fourth timestamp. In addition, the receiving end places the first timestamp, the third timestamp, and the fourth timestamp into the package header of the first response package. The first response package is a response package with an RTT request, the first response package includes an RTT extended package header, and the RTT extended package header of the first response package carries the first timestamp, the third timestamp, and the fourth timestamp.

In an embodiment, the network congestion control method applied to the receiving end may further include: receiving a second request package transmitted by the transmitting end, where the second request package does not carry the first timestamp. Transmitting a second response package corresponding to the second request package to the transmitting end, wherein the second response package does not carry the first timestamp, the third timestamp, and the fourth timestamp.

In the network congestion control method provided by the present application, by recording the first timestamp, the second timestamp, the third timestamp, and the fourth timestamp, and determining the first network transmission duration of the first request package by calculation, the network transmission duration of the first request package can be distinguished from the processing duration of the first request package at the receiving end, thereby avoiding a situation in which the determination of the congestion state of the network is distorted due to the influence of jitter of the processing duration of the first request package at the receiving end. In addition, by determining the network state through performing double determinations on the first network transmission duration with the second network transmission duration and the reference network transmission duration respectively, not only the existence of congestion can be determined, but also the degree of congestion can be determined, and the determination of the network congestion can be made more accurate. Thereby, the transmission rate of the next request package of the first request package is adjusted more reasonably and the network congestion is effectively controlled.

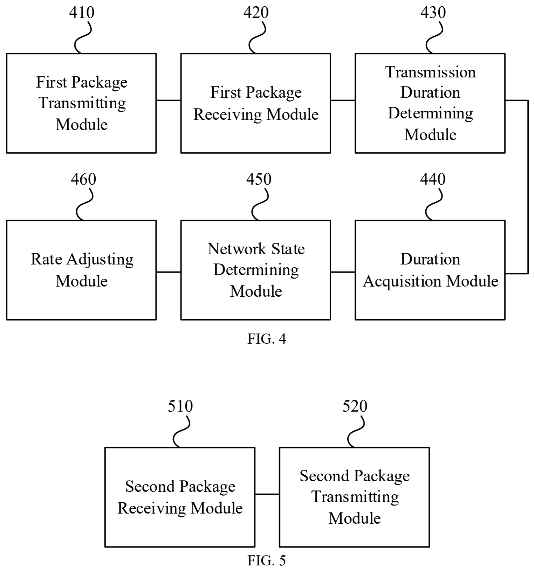

An embodiment of the present application further provides a network congestion control apparatus configured at a transmitting end. Referring to FIG. 4, which is a schematic structural diagram of a network congestion control apparatus configured at a transmitting end provided by an embodiment of the present application. As shown in FIG. 4, the apparatus includes a first package transmitting module 410, a first package receiving module 420, a duration determining module 430, a duration acquisition module 440, a network state determining module 450, and a rate adjusting module 460.

The first package transmitting module 410 is configured to transmit a first request package to a receiving end. The first request package carries a first timestamp, and the first timestamp is configured to mean a time at which the transmitting end transmits the first request package.

In the present application, the request package includes two types of request packages. One type is the first request package, and the other type is a second request package. For the first request package, the transmitting end transmits the first request package to the receiving end in two scenarios. In the first scenario, in order to detect the congestion state of the network, when the transmitting end transmits the request package for the first time, it transmits the first request package to the receiving end. In the second scenario, when the transmitting end receives a response package (i.e., a first response package) of the first request package, the transmitting end transmits the first request package to the receiving end.

For the second request package, the transmitting end transmits the second request package to the receiving end, in addition to transmitting the first request package to the receiving end. In addition, when the transmitting end receives a second response package of the second request package, the transmitting end transmits the second request package to the receiving end. Where the second request package is an ordinary data package and does not carry the first timestamp. The second response package does not carry the first timestamp, the third timestamp, and the fourth timestamp.

The first package receiving module 420 is configured to receive a first response package corresponding to the first request package and transmitted by the receiving end, and record a second timestamp. The first response package carries the first timestamp, a third timestamp, and a fourth timestamp. The second timestamp is configured to mean a time when the transmitting end receives the first response package. The third timestamp is configured to mean a time when the receiving end receives the first request package. The fourth timestamp is configured to mean a time when the receiving end transmits the first response package.

In the present application, the first response package includes an RTT package header, and the first response package carries the first timestamp, the third timestamp, and the fourth timestamp in the RTT package header.

The duration determining module 430 is configured to determine a first network transmission duration of the first request package based on the first timestamp, the second timestamp, the third timestamp, and the fourth timestamp.

In the present application, the first network transmission duration of the first request package may be understood as a duration from when the transmitting end transmits the first request package to when the transmitting end receives the first response package corresponding to the first request package, minus a processing duration from when the receiving end receives the first request package to when the receiving end transmits the first response package corresponds to the first request package. Every time after the first network transmission duration of the current first request package is determined, the transmitting end stores the first network transmission duration of the current first request package in a storage module.

In the present application, by determining the first network transmission duration of the first request package by calculation, the network transmission duration of the first request package can be distinguished from the processing duration of the first request package at the receiving end, thereby avoiding a situation in which the determination of the congestion state of the network is distorted due to the influence of jitter of the processing duration of the first request package at the receiving end.

The duration acquisition module 440 is configured to acquire a second network transmission duration and a reference network transmission duration. The second network transmission duration is a first network transmission duration of a previous first request package of the current first request package, and the reference transmission duration is a historical minimum first network transmission duration of the first request package.

In the present application, the transmitting end may select the historical minimum first network transmission duration of the first request package from the storage module.

The network state determining module 450 is configured to determine a network state for transmitting the first request package, based on comparison relationships between the first network transmission duration and the second network transmission duration, and between the first network transmission duration and the reference network transmission duration, respectively.

For example, the network state determining module 450 may be configured to determine at least the following several situations:
Situation 1: when the first network transmission duration is less than the second network transmission duration and greater than the reference network transmission duration, the network state may be determined as that a congestion exists and the congestion tends to be relieved.
Situation 2: when the first network transmission duration is less than the second network transmission duration and is equal to or less than the reference network transmission duration, the network state may be determined as that a congestion is likely to exist and the congestion tends to be relieved.
Situation 3: when the first network transmission duration is equal to the second network transmission duration and is greater than the reference network transmission duration, the network state may be determined as that a congestion exists and the congestion remains stable.
Situation 4: when the first network transmission duration is equal to the second network transmission duration and is equal to the reference network transmission duration, the network state may be determined as that a congestion is likely to exist and the congestion remains stable.
Situation 5: when the first network transmission duration is greater than the second network transmission duration and greater than the reference network transmission duration, the network state may be determined as that a congestion exists and the congestion tends to be severe.

In the present application, by determining the network state through performing double determinations on the first network transmission duration with the second network transmission duration and the reference network transmission duration respectively, not only the existence of congestion can be determined, but also the degree of congestion can be determined, and the determination of the network congestion can be made more accurate.
the rate adjusting module 460 is configured to adjust a transmission rate of a next request package of the first request package based on the network state.

For example, the rate adjusting module 460 is configured to acquire a transmission rate of the first request package, and adjust the transmission rate of the next request package of the first request package based on the network state and the transmission rate of the first request package.

For example, the rate adjusting module 460 may be configured to adjust the transmission rate in at least the following several situations:
Situation 1: when the network state is that a congestion exists and the congestion tends to be alleviated, or that a congestion is likely to exist and the congestion tends to be alleviated, a transmission rate of a next request package of the first request package may be maintained at the transmission rate of the first request package.
Situation 2: when the network state is that a congestion exists and the congestion remains stable, or that a congestion exists and the congestion tends to be severe, the transmission rate of the first request package may be reduced, to serve as the transmission rate of the next request package of the first request package.
Situation 3: when the network state is that a congestion is likely to exist and the congestion remains stable, the transmission rate of the first request package may be increased, to serve as the transmission rate of the next request package of the first request package.

In the network congestion control apparatus configured at the transmitting end provided by the present application, by recording the first timestamp, the second timestamp, the third timestamp, and the fourth timestamp, and determining the first network transmission duration of the first request package by calculation, the network transmission duration of the first request package can be distinguished from the processing duration of the first request package at the receiving end, thereby avoiding a situation in which the determination of the congestion state of the network is distorted due to the influence of jitter of the processing duration of the first request package at the receiving end. In addition, by determining the network state through performing double determinations on the first network transmission duration with the second network transmission duration and the reference network transmission duration respectively, not only the existence of congestion can be determined, but also the degree of congestion can be determined, and the determination of the network congestion can be made more accurate. Thereby, the transmission rate of the next request package of the first request package is adjusted more reasonably and the network congestion is effectively controlled.

It should be noted that, the network congestion control apparatus configured at the transmitting end provided by the embodiments of the present application can execute the network congestion control method provided by the embodiments of the present application, and has function modules and beneficial effects corresponding to the execution of the method.

An embodiment of the present application further provides a network congestion control apparatus configured at a receiving end. Referring to FIG. 5, which is a schematic structural diagram of a network congestion control apparatus configured at a receiving end provided by an embodiment of the present application. As shown in FIG. 5, the apparatus includes a second package receiving module 510 and a second package transmitting module 520.

The second package receiving module 510 is configured to receive a first request package transmitted by a transmitting end. The first request package carries a first timestamp. The first timestamp is configured to mean a time at which the transmitting end transmits the first request package.

In the present application, the first request package is a data package with an RTT request. The first request package includes an RTT extended package header, and the RTT extended package header of the first request package carries the first timestamp.

The second package transmitting module 520 is configured to transmit a first response package corresponding to the first request package to the transmitting end. The first response package carries the first timestamp, a third timestamp, and a fourth timestamp. The third timestamp is configured to mean a time when the receiving end receives the first request package. The fourth timestamp is configured to mean a time when the receiving end transmits the first response package.

In the present application, the first response package is a response package with an RTT request, the first response package includes an RTT extended package header, and the RTT extended package header of the first response package carries the first timestamp, the third timestamp, and the fourth timestamp.

In an embodiment, the network congestion control apparatus configured at the receiving end may further include a third package receiving module and a third package transmitting module.

The third package receiving module is configured to receive a second request package transmitted by the transmitting end, where the second request package does not carry the first timestamp.

The third package transmitting module is configured to transmit a second response package corresponding to the second request package to the transmitting end, where the second response package does not carry the first timestamp, the third timestamp, and the fourth timestamp.

In the technical solution of the embodiment of the present application, the receiving end receives a first request package transmitted by the transmitting end, where the first request package carries a first timestamp. After receiving the first request package, a first response package corresponding to the first request package is generated, and the first response package corresponding to the first request package is transmitted to the transmitting end, where the first response package carries the first timestamp, a third timestamp, and a fourth timestamp. In the technical solution of the embodiment of the present application, the receiving end records the first timestamp, the third timestamp, and the fourth timestamp into the first response package, which not only facilitates the transmitting end to distinguish the network propagation delay and the data processing delay, so as to avoid the influence of the data processing delay on the determination of the network state, thereby facilitating more accurate obtaining the delay of the request package in network propagation, but also achieves the technical effect that the receiving end and the transmitting end cooperatively control the network congestion.

It should be noted that, the network congestion control apparatus configured at the receiving end provided by the embodiments of the present application can execute the network congestion control method provided by the embodiments of the present application, and has function modules and beneficial effects corresponding to the execution of the method.

The present application further provides a chip. The chip includes a processor configured to execute computer program instructions stored on a memory, where when the computer program instructions are executed by the processor, the chip is triggered to execute the network congestion control method provided by the embodiments of the present application. For example, the chip may be a DPU chip.

The present application further provides an electronic device. The electronic device includes the chip, and a memory. The memory is configured to store computer program instructions. When the computer program instructions are executed by the processor in the chip, the processor is caused to implement the network congestion control method provided by the embodiments of the present application.

For example, the electronic device is intended to represent various forms of digital computers, such as a laptop computer, a desktop computer, a workbench, a personal digital assistant, a server, a blade server, a large-scale computer, and other suitable computers. The electronic device may also represent various forms of mobile devices, such as personal digital processing, a cellular phone, a smart phone, a wearable device (e.g., a helmet, glasses, a watch, etc.), and other similar computing devices. The components, and the connections and relationships thereof, and the functions thereof shown herein, are merely examples, and are not intended to limit the implementations of the present application described and/or required herein.

The present application further provides a computer readable storage medium, on which computer program instructions are stored, the computer program instructions are configured such that, when executed by the processor, cause the processor to implement the network congestion control method provided by the embodiments of the present application.

For example, the computer program instructions configured to implement the method of the present application may be written in any combination of one or more programming languages. These computer program instructions may be provided to a processor of a general-purpose computer, a special-purpose computer, or other programmable data processing apparatus, such that the computer program instructions, when executed by the processor, cause the functions/operations specified in the flowcharts and/or block diagrams to be implemented. The computer program instructions may be executed entirely on a machine, partly on the machine, partly on the machine and partly on a remote machine as individual software packages, or entirely on a remote machine or server.

For example, the computer readable storage medium may be a tangible medium that may contain or store a computer program for use by or in conjunction with an instruction execution system, an apparatus, or a device. The computer readable storage medium may include, but not limited to, an electronic, magnetic, optical, electromagnetic, infrared, or semiconductor system, apparatus, or device, or any suitable combination of the above contents. The computer readable storage medium may be a machine-readable signal medium. More specific examples of the machine-readable storage medium may include an electrical connection based on one or more wires, a portable computer disk, a hard disk, a Random Access Memory (RAM), a Read Only Memory (ROM), an Erasable Programmable Read-Only Memory (EPROM or flash memory), an optical fiber, a portable Compact Disk Read-Only Memory (CD-ROM), an optical storage device, a magnetic storage device, or any suitable combination of the above contents. The computer readable storage medium may be a non-transitory computer readable storage medium.

It is to be understood that, by using the various forms of the flows shown above, the steps may be reordered, added, or deleted. For example, the plurality of steps described in the present application may be executed in parallel, sequentially, or in different orders, and the present application is not limited herein, as long as the desired results of the technical solutions of the present application can be achieved.

## Claims

1. A network congestion control method, applied to a transmitting end, the method comprising:
transmitting a first request package to a receiving end, wherein the first request package carries a first timestamp, and the first timestamp is configured to mean a time at which the transmitting end transmits the first request package;
receiving a first response package corresponding to the first request package and transmitted by the receiving end, and recording a second timestamp, wherein the first response package carries the first timestamp, a third timestamp, and a fourth timestamp, the second timestamp is configured to mean a time when the transmitting end receives the first response package, the third timestamp is configured to mean a time when the receiving end receives the first request package, and the fourth timestamp is configured to mean a time when the receiving end transmits the first response package;
determining a first network transmission duration of the first request package based on the first timestamp, the second timestamp, the third timestamp, and the fourth timestamp;
acquiring a second network transmission duration and a reference network transmission duration, wherein the second network transmission duration is a first network transmission duration of a previous first request package of the current first request package, and the reference transmission duration is a historical minimum first network transmission duration of the first request package;
determining a network state for transmitting the first request package, based on comparison relationships between the first network transmission duration and the second network transmission duration, and between the first network transmission duration and the reference network transmission duration, respectively; and
adjusting a transmission rate of a next request package of the first request package, based on the network state.

2. The method according to claim 1, further comprising:
when the request package is transmitted for a first time or the first response package is received, transmitting the first request package to the receiving end; and
when receiving a second response package, transmitting a second request package to the receiving end; and
wherein the request package includes the first request package and the second request package, the second request package does not carry the first timestamp, and the second response package does not carry the first timestamp, the third timestamp, and the fourth timestamp.

3. The method according to claim 1, wherein the determining the network state for transmitting the first request package, based on the comparison relationships between the first network transmission duration and the second network transmission duration, and between the first network transmission duration and the reference network transmission duration respectively comprises:
when the first network transmission duration is less than the second network transmission duration and greater than the reference network transmission duration, determining the network state as a congestion exists and the congestion tends to be relieved;
when the first network transmission duration is less than the second network transmission duration and is equal to or less than the reference network transmission duration, determining the network state as a congestion is likely to exist and the congestion tends to be relieved;
when the first network transmission duration is equal to the second network transmission duration and is greater than the reference network transmission duration, determining the network state as a congestion exists and the congestion remains stable;
when the first network transmission duration is equal to the second network transmission duration and is equal to the reference network transmission duration, determining the network state as a congestion is likely to exist and the congestion remains stable; and
when the first network transmission duration is greater than the second network transmission duration and greater than the reference network transmission duration, determining the network state as a congestion exists and the congestion tends to be severe.

4. The method according to claim 3, wherein the adjusting the transmission rate of the next request package of the first request package based on the network comprises:
acquiring a transmission rate of the first request package;
when the network state is that a congestion exists and the congestion tends to be alleviated, or the network state is that a congestion is likely to exist and the congestion tends to be alleviated, maintaining a transmission rate of a next request package of the first request package at the transmission rate of the first request package;
when the network state is that a congestion exists and the congestion remains stable, or the network state is that a congestion exists and the congestion tends to be severe, reducing the transmission rate of the first request package, to serve as the transmission rate of the next request package of the first request package; and
when the network state is that a congestion is likely to exist and the congestion remains stable, increasing the transmission rate of the first request package, to serve as the transmission rate of the next request package of the first request package.

5. A network congestion control method, applied to a receiving end, the method comprising:
receiving a first request package transmitted by a transmitting end, wherein the first request package carries a first timestamp, and the first timestamp is configured to mean a time at which the transmitting end transmits the first request package; and
transmitting a first response package corresponding to the first request package to the transmitting end, wherein the first response package carries the first timestamp, a third timestamp, and a fourth timestamp, the third timestamp is configured to mean a time when the receiving end receives the first request package, and the fourth timestamp is configured to mean a time when the receiving end transmits the first response package.

6. The method according to claim 5, further comprising:
receiving a second request package transmitted by the transmitting end, wherein the second request package does not carry the first timestamp; and
transmitting a second response package corresponding to the second request package to the transmitting end, wherein the second response package does not carry the first timestamp, the third timestamp, and the fourth timestamp.

7. A network congestion control apparatus, configured at a transmitting end, the apparatus comprising: a first package transmitting module, a first package receiving module, a transmission duration determining module, a duration acquisition module, a network state determining module, and a rate adjusting module; wherein,
the first package transmitting module is configured to transmit a first request package to a receiving end, wherein the first request package carries a first timestamp, and the first timestamp is configured to mean a time at which the transmitting end transmits the first request package;
the first package receiving module is configured to receive a first response package corresponding to the first request package and transmitted by the receiving end, and record a second timestamp, wherein the first response package carries the first timestamp, a third timestamp, and a fourth timestamp, the second timestamp is configured to mean a time when the transmitting end receives the first response package, the third timestamp is configured to mean a time when the receiving end receives the first request package, and the fourth timestamp is configured to mean a time when the receiving end transmits the first response package;
the transmission duration determining module is configured to determine a first network transmission duration of the first request package based on the first timestamp, the second timestamp, the third timestamp, and the fourth timestamp;
the duration acquisition module is configured to acquire a second network transmission duration and a reference network transmission duration, wherein the second network transmission duration is a network transmission duration of a previous first request package of the current first request package, and the reference transmission duration is a historical minimum network transmission duration of a request package of a data flow to which the first request package belongs;
the network state determining module is configured to determine a network state for transmitting the first request package, based on comparison relationships between the first network transmission duration and the second network transmission duration, and between the first network transmission duration and the reference network transmission duration, respectively; and
the rate adjusting module is configured to adjust a transmission rate of a next request package of the first request package based on the network state.

8. A network congestion control apparatus, configured at a receiving end, the apparatus comprising: a second package receiving module and a second package transmitting module; wherein,
the second package receiving module is configured to receive a first request package transmitted by a transmitting end, wherein the first request package carries a first timestamp, and the first timestamp is configured to mean a time at which the transmitting end transmits the first request package; and
the second package transmitting module is configured to transmit a first response package corresponding to the first request package to the transmitting end, wherein the first response package carries the first timestamp, a third timestamp, and a fourth timestamp, the third timestamp is configured to mean a time when the receiving end receives the first request package, and the fourth timestamp is configured to mean a time when the receiving end transmits the first response package.

9. A chip, comprising:
a processor configured to execute computer program instructions stored on a memory, wherein when the computer program instructions are executed by the processor, the chip is triggered to execute the network congestion control method of any one of claims 1-4; or, the network congestion control method of any one of claims 5-6.

10. An electronic device, comprising the chip of claim 9, and a memory; wherein
the memory is configured to store computer program instructions; and
when the computer program instructions are executed by the processor in the chip, the processor is caused to implement the network congestion control method of any one of claims 1-4; or, the network congestion control method of any one of claims 5-6.

11. A computer readable storage medium, on which computer program instructions are stored, wherein the computer program instructions are configured such that, when executed by the processor, cause the processor to implement the network congestion control method of any one of claims 1-4; or, the network congestion control method of any one of claims 5-6.
